# EUROPEAN PATENT SPECIFICATION

(11) **EP 0 401 428 B1**
(45) Date of publication and mention of the grant of the patent: **26.01.1994**
(21) Application number: 89201455.6
(22) Date of filing: 06.06.1989
(51) Int. Cl.: A01G 9/14, A01G 13/04, A01G 9/20

(54) **Method and apparatus for use in plant growth promotion and flower development**
Verfahren und Vorrichtung zum Verwenden bei Planzenwachstumsförderung und Blumenentwicklung
Procédé et appareil à utiliser pour promouvoir la croissance de plantes et le developpement de fleurs

(43) Date of publication of application: 12.12.1990
(73) Proprietor: Longstaff, Eric, Stockport, Cheshire SK7 2AB (GB)
(72) Inventor: Longstaff, Eric, Stockport, Cheshire SK7 2AB (GB)
(74) Representative: Ajello, Michael John

(56) References cited:
- EP-A- 0 172 151
- GB-A- 1 247 066
- GB-A- 2 014 513
- GB-A- 2 158 833
- US-A- 2 639 550

## Description

### Field of the Invention

The current invention relates to green plant growth promoting apparatus for use in maximizing the production of food crop and flowering plants comprising a plurality of individual plastic screen means as well as control means for selectively imposing - in an independent way from each other - the radiation absorbing action of said individual screen means. The invention involves the provision of several specially constituted thermoplastic screens which offer singley or in combination shade from the auxin-destroying UV-radiation, the growth retarding photosynthesis-unusable green and infra-red light of the sun, but the same time, will optimize the photosynthesis rate of the plant and encourage rapid growth. In addition, by careful selection of the screen wavelength combinations, growth control and flowering may be managed by those skilled in the art of horticulture.

### Background of the Invention

Numerous attempts have been made to control the growth environment of crop plants so as to improve yield and control the timing of flowering. These include providing shelter from wind and heavy rain, as for example by erection of a "greenhouse" or by applying various chemicals which control growth by simulating the effects of the natural plant hormones. Inevitably there is a trade off, in the case of the greenhouse, scorching becomes a problem due to light focusing and the overheating created by the "greenhouse effect" of trapping radiant energy, whereas in the case of chemical application there are attendent problems associated with residues both in the food crop and in the soil.

For instance GB-A-2 158 833 refers to a polymeric material for covering greenhouses comprising a light-transparant polymer and an additive. This additive absorbs the ultraviolet component of natural light (200-450 nm) and transforms it through luminescence into the light component in the orange-red spectral range (580-750 nm) considered the most effective range for plant growth and development. The additive present in the polymeric material is at least one compound of a f-element capable of absorbing the UV component of daylight and of fluorescenting within the orange-red spectral range. Examples of such elements are europium, terbium and samarium.

Further, in EP-A-0 172 151 a greenhouse screen is disclosed which is made of a film, textile, non-woven material or a combination thereof with high light resistance and good weathering characteristics. However, this screen material absorbs a significant part of the light in the range of 575-800 nm whereas it transmits the photosynthesis light in the range of 400-575 nm.

In order to understand fully the significance of the current invention it is first necessary to review the constitution of terrestrial sunlight and to realize how plants exploit this radiation.

Terrestrial sunlight has been considered to consist of short-wave ultraviolet light (UV-B, 290-320 nm), long-wave ultraviolet light (UV-A, 320-400 nm), visible light (400-700 nm) and infra-red light (700-2500 nm). On a clear day at sea level, the distribution of solar radiation is about 1-2 % UV, 42 % visible and 57 % infra-red. It is now generally recognized that the UV-B radiation is dangerous to all living cells leading to various genotoxic disorders by mutation and will cause, at high enough exposure levels, plant and animal cell death. UV-A on the other hand is apparently harmless to animal tissues at natural radiation levels, but green plants have utilized the hormone-destroying effect of UV-A light to control or regulate their growth, while protecting themselves as best they can from the dangerous UV-B rays with the pigment chlorophyll. It has been known since Darwin's time that plants produce a growth stimulating substance (hormone or auxin) near their growth tips which diffuses downwards promoting further growth and that if completely shaded, plants will grow, for a limited period, at about three times their illuminated rate (e.g. "forcing" of hyacynthe or rhubarb shoots) and that the bending of plants towards light is caused by the protection of the auxin from light denaturation on the darkside of plants grown on say a window sill. The specific wave-lengths of light which denature auxins lie in the UV-range, 290-340 nm and the photolysis of such auxins can occur even at quite meager light intensities. Prevention of photolysis would render the plants continuously sensitive to their own growth stimulation. In a similar manner, the induction of flower formation and development has been determined to be influenced by the presence and the intensity of natural red light and consequently flowering may be encouraged or delayed by manipulating the filtered environment so as to provide or absorb those wavelengths responsible. It is the purpose of this invention to provide such an environment or environments.

### Summary of the Invention

Briefly described the present invention provides method and apparatus for encouraging maximal plant growth which method and apparatus comprise a light filter which prevents the natural decay of plant growth stimulating materials by absorption of UV-radiation while permitting photosynthesis to occur with blue light in the absence of attendant heat generating and dehydrating radiations caused by green, yellow and infra-red light. The objective is made possible according to the preferred embodiment of the invention by interposing a combination of filters made of solid material between the sun and the growing plants which block out radiation in those wavelengths which are either physiologically harmful or which retard growth, but do not inhibit those wavelengths which are necessary for photosynthesis, metabolism, differentiation and development.

More in particular the invention relates to a sunscreening apparatus (10) for the growth promotion of green plants comprising a plurality of individual plastic first screen means (12) for absorbing UV-radiation in the range of 290-340 nm and second screen means (14) for absorbing IR-radiation in the range of 800-2500 nm as well as control means for selectively imposing - in an independent way from each other - the radiation absorbing action of said individual screen means, characterized in that the second screen means (14) comprises an agent means for absorbing radiation in the range of 510-610 nm.

The apparatus of the preferred embodiment of the present invention comprises at least three filters, i.e. also a third screen means (16) for absorbing radiation in the range of 610-710 nm employed either together, separately, continuously, or discontinuously, as a canopy above growing plants.

It is recorded in the prior art that plants may be protected from solar radiation by the provision of a single filter which will simultaneously and selectively absorb UV and other radiations to protect plants from physiologically dangerous radiation (e.g. wavelengths of 300-330 nm, in Mutzhas, US-A- 4,200,360); however, the present invention allows the nurseryman to vary the wavelength range and intensity continuously, and during the growth of his crop. The advantage here is that various stages of plant development such as flowering or fruiting may be modified and managed as well as the rate of the plants growth.

Other objects, features and advantages of the present invention will become apparent upon reading and understanding this specification in conjunction with the drawings.

### Brief Description of the Drawings

Fig.1 is a graph representing the selective absorption of wavelength of sunlight, in accordance with a preferred embodiment of the present invention.

Fig.2 is a cross-sectional, side view of an apparatus in accordance with the present invention, depicting a preferred embodiment thereof.

### Detailed Description of the Preferred Embodiment

Attention is now directed to more specific details of preferred embodiments of the method and apparatus of the present invention, with reference in greater detail to the drawings. In accordance with the present invention, a filter assembly 10 displays selective and variable radiation absorption features. In the preferred embodiment, the filter assembly 10 comprises three screens 12, 14, 16 (or three sets of screens 12, 14, 16).

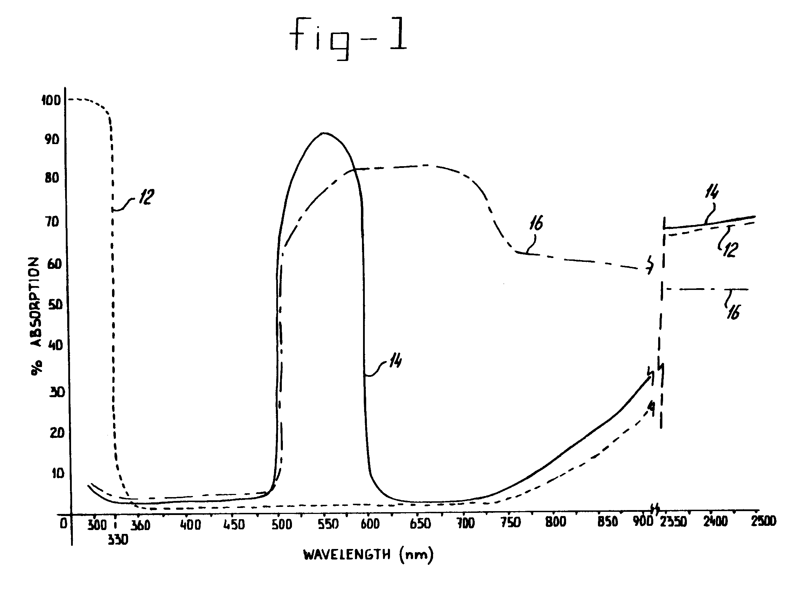

The outer screen 12 of the three screens provides a mechanism by which the plants may be protected from harmful UV radiation. The outer screen 12 is constituted so as to exclude from the growing plants, by absorption, that portion of UV-light known to cause DNA-damage and denaturation of the naturally occuring plant growth promoters and auxins, but at the same time to transmit as much white light and infra-red as practical. The wavelengths to be absorbed by this outer filter screen 12 lie, therefore, in the range 290-340 nm (see Fig. 1).

A suitable material for the outer screen 12 is any thermoplastic material or acrylic resin in the form of either a thin film or woven or laminated material but exhibiting the property of being transparent to solar energy wavelengths above 340 nm which are those associated with heat and photosynthesis. Suitable materials for the outer screen 12 when in film form are resins of polyvinyl chloride, polyolefins such as polyethylene and polypropylene, or acrylic resins such as polymethylmethacrylate. Copolymers such as polyethylene/vinyl acetate and butadiene/styrene would also suffice. Such resins may also include plasticisers such as phthallate esters. The outer screen 12 includes UV absorbers of various chemical types at such concentration to provide both longevity to the material and selective absorption of UV below 340 nm. It is preferable that the outer screen 12 shall not have significant absorption, i.e. greater than 20%, of the natural wavelengths of light above 340 nm. In preferred embodiments of the present invention, the UV absorbers constitute between 0.01 and 0.5 % by weight of the screen material. An example of a suitable UV absorber is (2-chloroethyl) phosphate or acetophenone at a concentration of 0.1 w/w. Another example of a suitable absorber is 2-[2-hydroxy-5methylphenyl]benzotriazole at a concentration of 0.05 % w/w.

A preferred material for the outer screen is polyethylene film of thickness between 100 and 300 microns, for example 200 microns, and this may be a single film or a laminate form with a reinforcing nylon or polyester net to give greater physical strength. The resin should also be light stable and non-volatile at the relatively high temperatures used in blow forming, extrusion or callendering of lay-flat film (i.e. about 1500°C). It is also essential according to the invention that the outer film be not polished, and preferably, it should be finished as a matte or taffeta surface to provide a light diffusion effect. The growth of plants is enhanced by diffused rather than direct light.

The second screen 14, which is, preferably, arranged between the outer screen 12 and the growing plants, provides, in the preferred embodiment, protection from the unnecessary heating effect of light within the spectral wavelength ranges 510-610 nm and 800-2500 nm (see Fig. 1). In the preferred embodiment, the second screen 14 is comprised of a set of two screening films. These two films making up the second set of screens are ideally identical to each other although not necessarily so. The objective of this set is to provide the plants, at the discretion of the nurseryman, with an optional single or double degree of shade from heat (800-2500 nm) and intense green and yellow light (510-610 nm) but permitting maximum photosynthesis, synthesis of chlorophyll and photomorphogenesis, to occur. These screens should absorb maximally within the wavelength range 510-610 nm and consequently appear purple or violet in colour. Suitable materials for these screens are as described for the outer screen 12 but there is no necessity to include UV absorbers and a suitable thickness is between 100-300 microns. However, included in these screens according to the present invention and to achieve the objective of absorbing light in the range 510-610 nm, a pigment such as CI pigment Violet 37 (carbazole dioxazine) must be included in the formulation of the said screens at a concentration of, for example, 0.05 % w/w. This same pigment accomplishes the desired absorption of infra-red radiation of wavelengths between 800 nm and 2500 nm. Preferably, the pigment or dye used is heat and light stable. Care must be taken however when selecting a suitable pigment that little, if any, absorption occurs in the photosynthesis-essential ranges of 340-510 nm (blue) and 610-710 nm (red). A combination of the previously described, UV absorbing, outer screen 12 and this second screen 14 (or set of screens 14) absorbing green, yellow and infrared light, provide the plants with selected solar protection. Experience has shown growth rates to be enhanced by up to three times the unprotected rate. This combination of screens has been shown to encourage growth and development, especially of young plants.

In order to delay the flowering and fruiting of mature plants, it is necessary to provide, according to the invention, a third screen 16, comprising a set of at least one additional or alternative filter which will absorb those wavelengths of light known to be effective in inducing flowering, i.e. red light in the range 610-710 nm. Provision of this third screen filter 16, either in combination with the outer screen 12 and the second set of screens 14 previously described, or in combination with just the outer screen 12, will permit synchronisation of plant growth and flowering. When flowering is required, the nurseryman has simply to remove this third screen filter 16 which absorbs light in the range 510-710 nm and replace it by the second screen 14 which transmits red light in the range 610-710 nm. This third screen 16, in the preferred embodiment, also absorbs infra-red radiation (800-2500 nm). The objective of the third screen filter 16 is achieved by constructing a filter material as that previously described for the second set 14 but including in the formulation a pigment which will absorb substantially only red, green and yellow light in the range 510-710 nm, but which will transmit light in the blue region of the spectrum, i.e. between 340 and 500 nm (see Fig. 1). Such a filter will appear blue and suitable pigment would be, for example, CI pigment blue 60 (Cromophtal Blue A3R, Indanthone blue). This same pigment accomplishes desired absorption of infra-red radiation of wavelengths in the range 800 nm and 2500 nm. Preferably, the pigment or dye utilized is heat and light stable.

It is seen that the filter assembly 10 of the present invention functions as a growth regulator and promoter and that each of the three screens 12, 14, 16 individually contributes to the ideal photosynthetic and development needs of green plants. Because any one green plant does not use the same wavelengths of solar radiation at different times during its growth and development, the present invention provides a means whereby the nurseryman can choose which filtered light environment he thinks fit for his crop. This choice of environment is accomplished, in accordance with the preferred embodiment, by selectively interposing one or more of the filter screens 12, 14, 16 between the growing plants and sun.

Furthermore, in addition to its functions as a growth regulator and promoter, the present invention provides environmental control by eliminating those wave-lengths of light which cause overheating, dehydration and wilting. These energy-rich wavelengths of light do their damage without contributing to the photosynthetic capacity of the plant, and, therefore, are of little benefit to the plant during the growth period in the natural environment. Elimination of these rays permit unhindered growth during daylight hours. In order to capitalize on such growth stimulation, the plants so stimulated need to operate their photosynthesis machinery to maximum advantage. Maximal photosynthesis is governed by several limiting factors including temperature (range 68-86°F), carbon dioxide concentration (natural limit 0.03%, but ideally 10-15%), water content (plants must remain turgid) and light intensity (ideally about 33% full sunlight intensity). With respect to the current invention, in addition to protecting the plant from mutation and auxin photolysis, the apparatus is capable of controlling photo-synthetic rate by preventing overheating and, therefore, excess water loss, and providing the plant with only those wavelengths of light usable in photosynthesis, i.e. red and blue light, thus preventing the growth and photosynthesis retardation effect of high light intensity known as solarization. The apparatus brings maximum advantage to crops grown in hot, arid, high light intensity regions, e.g. mediterranean and tropical climates, but considerable advantage should be accrued in temperate zones.

Whereas, 100% absorption of radiation within the stated wavelengths is an ideal embodiment of the present invention, the invention is practiced whenever there is absorption of radiation, in any amounts, of any wavelengths within the stated ranges of wavelengths. Preferred embodiments of the present invention absorb biologically significant amounts of radiation of substantially all wavelengths within the stated ranges of wavelengths. One example of a filter assembly 10, in accordance with the present invention, includes an outer screen 12 containing an agent or agents which absorbs at least 80% of the UV radiation within the stated ranges of wavelengths, 290-340 nm; and the second and third sets of screens 14, 16 contain agents which absorbs at least 50 % of the respective green/yellow, red and infra-red radiation within the stated ranges of wavelengths (510-610 nm and 800-2500 nm) and (610-710 nm and 800-2500 nm) respectively.

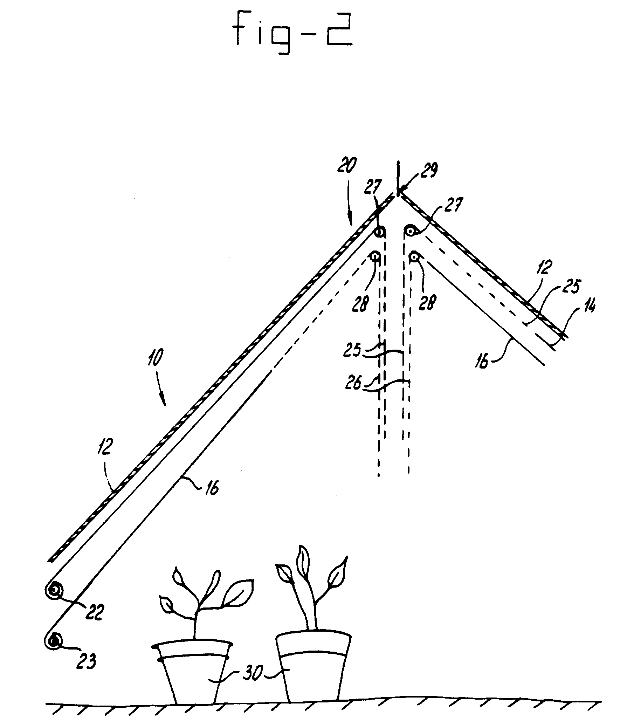

A filter assembly 10 in the form of a greenhouse 20 of conventional construction exemplifies a form in which the growth promotors may be supported and varied (see Fig. 2). In such a greenhouse structure 20, the outer screen 12 of the filter assembly 10 forms the semi-permanent weather structure (i.e. roof and sides) of the greenhouse. The second screen 14 and third screen 16 are mounted on rollers 22, 23 inside the greenhouse, between the outer screen 12 and the growing plants 30. Hoisting ropes 25, 26 are connected to the ends of the second screen 14 and third screen 16 and extended over pulleys 27, 28 at the peak 29 of the greenhouse 20. Thus, the second screen 14 and third screen 16 function as blinds or curtains which the nurseryman selectively interposes, alternately or together, between the outer screen 12 and the plants 30 by unrolling and rolling the screens 14, 16 using the ropes 25, 26 and rollers 22, 23. However, the scope of the present invention is not to be limited to the physical structure of a canopy or greenhouse.

In an alternate embodiment of the present invention, the filter assembly 10 comprises only two screens or sets of screens which are employed either together, separately, continuously or discontinuously between the radiation source and the plants. In such an embodiment, one screen (i.e. the stationary screen) possesses the absorption qualities of both outer screen 12 and second screen 14 as described above, and the other screen 16 (i.e. the retractable screen) absorbs, at least, radiation of wavelengths 610-710 nm.

## Claims

1. A sunscreening apparatus (10) for the growth promotion of green plants comprising a plurality of individual plastic first screen means (12) for absorbing UV-radiation in the range of 290-340 nm and second screen means (14) for absorbing IR-radiation in the range of 800-2500 nm as well as control means for selectively imposing - in an independent way from each other - the radiation absorbing action of said individual screen means, characterized in that the second screen means (14) comprises an agent means for absorbing radiation in the range of 510-610 nm.

2. A sunscreening apparatus according to Claim 1, characterized in that the first screen means (12) comprises an agent means absorbing at least 80 % of the UV-radiation in the range of 290-340 nm.

3. A sunscreening apparatus according to Claims 1 or 2, characterized in that the second screen means (14) comprises an agent means absorbing at least 50 % of the radiation in the ranges of at least 510-610 nm and 800-2500 nm respectively.

4. A sunscreening apparatus according to any of Claims 1-3, characterized in that the screen means (12,14) are constructed of flexible sheets or films having a thickness of 100-300 microns and made of a plastic material chosen from the group of polyvinyl chloride, polyolefin, polyester and an acrylic resin.

5. A sunscreening apparatus according to any of Claims 1-4, characterized in that the agent means in the first screen means (12) is present in an amount of 0.01-5 % by weight of said first screen means.

6. A sunscreening apparatus according to any of Claims 1-4, characterized in that the agent means in the second screen means (14) is a heat and light stable drye or pigment.

7. A sunscreening apparatus according to any of Claims 1-6, characterized in that the apparatus comprises a third screen means (16) comprising an agent means for absorbing radiation in the range of 610-710 nm.

8. A sunscreening apparatus according to Claim 7, characterized in that the third screen means comprises an agent means for absorbing at least 50 % of the radiation in the range of 610-710 nm.

9. A sunscreening apparatus according to Claim 7 or 8, characterized in that the agent means in the third screen means (16) is present in an amount of less than 1 % by weight of said third screen means.

10. A sunscreening apparatus according to any of Claims 7-9, characterized in that the agent means in the third screen means (16) is a heat and light stable dye or pigment.

11. A sunscreening apparatus according to any of Claims 1-5, characterized in that the second screen means (14) has been replaced by screen means (16) comprising an agent means for absorbing radiation in the range of 610-710 nm.

12. A sunscreening apparatus according to Claim 11, characterized in that the second screen means (14) has been replaced by screen means (16) comprising an agent means for absorbing at least 50 % of the radiation in the range of 610-710 nm.

13. A method for promoting growth of green plants, characterized by using a sunscreening apparatus defined in any of the claims 1-12.

14. The method according to Claim 13, characterized by applying steps of selectively creating at various periods within the growth cycle of the plant of at least two differing solar radiation environments.

15. The method according to Claim 14, characterized in that the differing solar radiation environments are distinguished by differing amounts of radiation in the range of 610-710 nm.

16. The method according to Claims 14 or 15, characterized in that the differing solar radiation environments are dinstinguished by differing amounts of radiation of wavelengths within the range of 510-710 nm.

## Patentansprüche

1. Sonnenschutzvorrichtung (10) zur Wachstumsförderung von Grünpflanzen umfassend eine Vielzahl von ersten, individuellen Plastikabschirmmitteln (12) zum Absorbieren von UV-Strahlung in dem Bereich von 290 bis 340 nm und zweite Abschirmmittel (14) zum Absorbieren von IR-Strahlung in dem Bereich von 800 bis 2500 nm sowie Kontrollmittel zum selektiven Auferlegen der Strahlungsabsorptionshandlung besagter individuellen Abschirmmittel - unabhängig voneinander -, dadurch gekennzeichnet, daß ein zweites Abschirmmittel (14) ein Agensmittel zum Absorbieren von Strahlung in dem Bereich von 510 bis 610 nm umfaßt.

2. Sonnenschutzvorrichtung nach Anspruch 1, dadurch gekennzeichnet, daß ein erstes Abschirmmittel (12) ein Agensmittel umfaßt, das zumindest 80 % der UV-Strahlung in dem Bereich von 290 bis 340 nm absorbiert.

3. Sonnenschutzvorrichtung nach Anspruch 1 oder 2, dadurch gekennzeichnet, daß das zweite Abschirmmittel (14) ein Agensmittel umfaßt, das zumindest 50 % der Strahlung in den Bereichen von zumindest 510 bis 610 nm bzw. 800 bis 2500 nm absorbiert.

4. Sonnenschutzvorrichtung nach irgendeinem der Ansprüche 1 bis 3, dadurch gekennzeichnet, daß die Abschirmmittel (12, 14) aus biegsamen Schichten oder Filmen hergestellt sind, die eine Dicke von 100 bis 300 Mikromillimeter aufweisen und aus einem Plastikmaterial gemacht sind, das aus der Gruppe bestehend aus Polyvinylchlorid, Polyolefin, Polyester und einem Acrylharz ausgewählt ist.

5. Sonnenschutzvorrichtung nach irgendeinem der Ansprüche 1 bis 4, dadurch gekennzeichnet, daß das Agensmittel in dem ersten Abschirmmittel (12) in eine Menge von 0,01 bis 5 Gew.-% besagten ersten Abschirmmittels vorhanden ist.

6. Sonnenschutzvorrichtung nach irgendeinem der Ansprüche 1 bis 4, dadurch gekennzeichnet, daß das Agensmittel in dem zweiten Abschirmmittel (14) ein wärme- und lichtstabiles Färbemittel oder Pigment ist.

7. Sonnenschutzvorrichtung nach irgendeinem der Ansprüche 1 bis 6, dadurch gekennzeichnet, daß die Vorrichtung dritte Abschirmmittel (16) umfaßt, die ein Agensmittel zum Absorbieren von Strahlung in dem Bereich von 610 bis 710 nm aufweisen.

8. Sonnenschutzvorrichtung nach Anspruch 7, dadurch gekennzeichnet, daß ein drittes Abschirmmittel ein Agensmittel zum Absorbieren von zumindest 50 % der Strahlung in dem Bereich von 610 bis 710 nm absorbiert.

9. Sonnenschutzvorrichtung nach Anspruch 7 oder 8, dadurch gekennzeichnet, daß das Agensmittel in dem dritten Abschirmmittel (16) in einer Menge von weniger als 1 Gew.-% besagten dritten Abschirmmittels vorhanden ist.

10. Sonnenschutzvorrichtung nach irgendeinem der Ansprüche 7 bis 9, dadurch gekennzeichnet, daß das Agensmittel in dem dritten Abschirmmittel (16) ein wärme- und lichtstabiles Färbemittel oder Pigment ist.

11. Sonnenschutzvorrichtung nach irgendeinem der Ansprüche 1 bis 5, dadurch gekennzeichnet, daß das zweite Abschirmmittel (14) durch ein Abschirmmittel (16) ersetzt worden ist, daß ein Agensmittel zum Absorbieren von Strahlung in dem Bereich von 610 und 710 nm aufweist.

12. Sonnenschutzvorrichtung nach Anspruch 11, dadurch gekennzeichnet, daß das zweite Abschirmmittel (14) durch ein Abschirmmittel (16) ersetzt worden ist, das ein Agensmittel zum Absorbieren von zumindest 50 % der Strahlung in dem Bereich von 610 bis 710 nm umfaßt.

13. Verfahren zur Wachstumsförderung von Grünpflanzen, gekennzeichnet durch die Verwendung einer Sonnenschutzvorrichtung nach irgendeinem der Ansprüche 1 bis 12.

14. Verfahren nach Anspruch 13, gekennzeichnet durch Anwenden von Schritten zum selektiven Erzeugen bei verschiedenen Perioden innerhalb des Wachstumszyklusses der Pflanze von zumindest zwei unterschiedlichen Sonnenbestrahlungsumgebungen.

15. Verfahren nach Anspruch 14, dadurch gekennzeichnet, daß die verschiedenen Sonnenbestrahlungsumgebungen unterschieden werden durch die unterschiedlichen Mengen von Strahlung in dem Bereich von 610 bis 710 nm.

16. Verfahren nach Anspruch 14 oder 15, dadurch gekennzeichnet, daß die unterschiedlichen Sonnenbestrahlungsumgebungen unterschieden werden durch unterschiedliche Mengen an Strahlung der Wellenlängen innerhalb des Bereichs von 510 bis 710 nm.

## Revendications

1. Dispositif pare-soleil (10) destiné à favoriser la croissance des plantes vertes, comprenant une pluralité de premiers écrans plastiques individuels (12) destinés à absorber le rayonnement UV dans la plage de 290-340 nm et des seconds écrans (14) destinés à absorber le rayonnement IR dans la plage de 800-2500 nm ainsi que des moyens de contrôle pour imposer sélectivement - d'une manière indépendante - l'action d'absorption du rayonnement des différents écrans individuels, dispositif caractérisé en ce que les seconds écrans (14) comprennent un agent absorbant la radiation dans la plage de 510-610 nm.

2. Dispositif pare-soleil selon la revendication 1, caractérisé en ce que les premiers écrans (12) comprennent un agent absorbant au moins 80 % du rayonnement UV dans la plage de 290-340 nm.

3. Dispositif pare-soleil selon la revendication 1 ou 2, caractérisé en ce que les seconds écrans (14) comprennent un agent absorbant au moins 50 % du rayonnement dans les plages d'ou moins 510-610 nm et 800-2500 nm respectivement.

4. Dispositif pare-soleil selon l'une quelconque des revendications 1-3, caractérisé en ce que les moyens (12, 14) sont constitués de feuilles souples ou de pellicules ayant une épaisseur de 100-300 microns et réalisés en un matériau plastique choisi dans le groupe du chlorure de polyvinyle, de polyoléfine, du polyester et de résine acrylique.

5. Dispositif pare-soleil selon l'une quelconque des revendications 1-4, caractérisé en ce que l'agent dans le premier écran (12) est présent dans une quantité de 0,01-5 % en poids du premier écran.

6. Dispositif pare-soleil selon l'une quelconque des revendications 1-4, caractérisé en ce que l'agent dans le second écran (14) est un colorant ou pigment stable à la lumière et à la chaleur.

7. Dispositif pare-soleil selon l'une quelconque des revendications 1-6, caractérisé en ce que l'appareil comprend un troisième écran (16) comprenant un agent pour absorber le rayonnement dans la plage de 610-710 nm.

8. Dispositif pare-soleil selon la revendication 7, caractérisé en ce que le troisième écran comprend un agent destiné à absorber au moins 50 % du rayonnement dans la plage de 610-710 nm.

9. Dispositif pare-soleil selon la revendication 7 ou 8, caractérisé en ce que l'agent dans le troisième écran (16) est présent dans une quantité inférieure à 1 % en poids du troisième écran.

10. Dispositif pare-soleil selon l'une quelconque des revendications 7-9, caractérisé en ce que l'agent du troisième écran (16) est un colorant ou pigment stable à la lumière et à la chaleur.

11. Dispositif pare-soleil selon l'une quelconque des revendications 1-5, caractérisé en ce que le second écran (14) a été remplacé par un écran (16) comprenant un agent destiné à absorber le rayonnement dans la plage de 610-710 nm.

12. Dispositif pare-soleil selon la revendication 11, caractérisé en ce que le second écran (14) a été remplacé par un écran (16) comprenant un agent destiné à absorber au moins 50 % du rayonnement dans la plage de 610-710 nm.

13. Procécé destiné à favoriser la croissance de plantes vertes, caractérisé par l'utilisation d'un dispositif pare-soleil défini dans l'une quelconque des revendications 1-12.

14. Procédé selon la revendication 13, caractérisé par l'application d'étapes de création sélective à différentes périodes du cycle de croissance de la plante d'au moins deux environnements de rayonnement solaire différente.

15. Procédé selon la revendication 14, caractérisé en ce que les environnements de rayonnement solaire différente se distinguent par des quantités différentes de radiations dans la plage de 610-710 nm.

16. Procédé selon les revendications 14 ou 15, caractérisé en ce que les environnements de rayonnement solaire différents se distinguent par des quantités différentes de rayonnement de longueurs d'onde dans la plage de 510-710 nm.
